Europäisches Patentamt

European Patent Office

Office européen des brevets

(19)

(11) Publication number: 0 142 781
A2

(12) EUROPEAN PATENT APPLICATION

(21) Application number: 84113479.4

(22) Date of filing: 08.11.84

(51) Int. Cl.⁴: G 11 B 5/60

(30) Priority: 11.11.83 JP 210871/83

(43) Date of publication of application:
29.05.85 Bulletin 85/22

(84) Designated Contracting States:
DE FR GB

(71) Applicant: HITACHI, LTD.
6, Kanda Surugadai 4-chome Chiyoda-ku
Tokyo 100(JP)

(72) Inventor: Nagaike, Sadanori
3-2-25, Koyawata
Odawara-shi Kanagawa-ken(JP)

(72) Inventor: Nakajima, Hiroyasu
163-1, Yahagi
Odawara-shi Kanagawa-ken(JP)

(72) Inventor: Ohura, Masaki
717-29, Odake
Odawara-shi Kanagawa-ken(JP)

(72) Inventor: Takeshita, Kohji
5-14-12-169, Ohgi-cho
Odawara-shi Kanagawa-ken(JP)

(74) Representative: Patentanwälte Beetz sen. - Beetz jun.
Timpe - Siegfried - Schmitt-Fumian
Steinsdorfstrasse 10
D-8000 München 22(DE)

(54) Magnetic head slider assembly.

(57) A magnetic head slider assembly having an air bearing surface (10) to enable the slider to float relative to a surface of a rotating magnetic disk and provided with a thin-film magnetic head element is formed of a composition comprising zirconium oxide. The composition can further comprise yttrium oxide in an amount in the range of 6 to 11 mol %, and preferably 8 to 10 mol %, the magnetic head slider having structural stability and superior machining prosperities.

FIG. I

EP 0 142 781 A2

MAGNETIC HEAD SLIDER ASSEMBLY    **0142781**

BACKGROUND OF THE INVENTION

This invention relates to a magnetic head slider assembly, and particularly to a material for the slider and a process for the preparation of the material.

The slider on which a magnetic transducer is mounted is generally used for floating a magnetic head in a magnetic disk unit.

Recently thin-film magnetic heads have been used for floating magnetic heads, for instance, as shown in the magazine ELECTRONIC DESIGN 5, March 1, 1980, page 60 to 62.

Heretofore, slider materials desirable for thin-film magnetic heads have been those which are superior in machining properties and suitable for shaping into high-precision components, such as the thin-film magnetic head, as described in the U.S. Patent No. 4,251,841. The material of the magnetic head used in a magnetic disk unit especially must be able to withstand contact trouble arising between the magnetic disk and the magnetic head, i.e. the head crush. In the stationary condition, the magnetic head is normally kept afloat above the rotating magnetic disk surface with a space of 0.2 to 0.5 $\mu$ m. On the other hand in the transient condition, for the magnetic disk to reach a steady revolution or in a stop condition, there arises a phenomenon in which the magnetic disk and the head slider are sliding in contact with each other. This is commonly called the contact start stop (CSS). The equipment reliability generally depends on these sliding characteristics. To date, $Al_2O_3 \cdot TiC$, described as a material therefor in the specification of the aforesaid U.S. Patent 4,251,841, has not been found to provide such equipment reliability.

## SUMARY OF THE INVENTION

The properties required of a substrate for a thin-film magnetic head assembly are firstly that the substrate is chemical and heat stable without undergoing corrosion or deformation in the process of forming a thin-film element. Secondly, it must easily provide dimensional accuracy when machined into a slider and must be easy to cut, grind and polish. Thirdly it must possess a superior sliding property with regard to the magnetic disk.

Since sintered $Al_2O_3 \cdot TiC$ has been found to be inferior in its sliding property with regard to the magnetic disk as described previously, the present inventors have searched for a substrate material having a satisfactory sliding property and find that zirconium oxide ($ZrO_2$) exhibits a superior sliding property.

Accordingly, an object of the present invention is to provide a magnetic head slider having superior sliding characteristics with regard to a magnetic disk.

Zirconium oxide has been a material difficult to calcine because it assumes three different crystal forms, i.e. monoclinic structure, tetragonal structure and cubic structure, which are stable in their respective temperature ranges. For example, zirconium oxide which has been sintered at a high temperature is transformed from the cubic to the tetragonal structure and from the tetragonal to the monoclinic structure in the process of cooling to room temperature, and the sintered product undergoes volume change or cracking at each transformation. However, it has recently been made possible for zirconium oxide, whose phase is stable at a high temperature, to assume a stable phase even at room temperature by incorporating therein yttrium oxide ($Y_2O_3$) or calcium oxide as a solid solution. Partially stabilized zirconia was produced by incorporating zirconium oxide, for example, with 2 to 4 mol % of yttrium oxide as a solid solution, thereby enabling it to maintain its tetragonal structure in a stable form which is normally unstable at room temperature. Nevertheless, when this partially stabilized zirconia is used for a thin-film magnetic head substrate by laminating with an insulator layer, a conductor and a magnetic material and then subjecting the laminate to a heat cycle, its crystal form is altered from the tetragonal to the monoclinic structure, followed by a volume expansion due to the transformation. As the result, there occurs a positional deviation between the pattern formed in the initial stage of the process and the one formed in the later stage. Moreover, in the machining of this material, into a slider, its top region which assumes a tetragonal structure during the process is transformed to a monoclinic form on account of machining strain and thereby undergoes an expansion to absorb the machining strain. Then the material becomes difficult to machine because its top region cannot be cut smoothly.

In order to realize dimensional stability and superior machining properties, applicants add yttrium oxide or calcium oxide in larger amounts to zirconium oxide. For example, when zirconium oxide is sintered with the addition of 6 to 11 mol %, preferably 8 to 10 mol %, of yttrium oxide, its cubic structure, normally stable only at a high temperatures, is still present at room temperature. Accordingly the above material acquires an improved machining property and is prevented from phase transformation during machining. The resulting magnetic head slider possesses an excellent sliding property with regard to the magnetic disk.

## BRIEF DESCRIPTION OF THE DRAWINGS

Figure 1 shows a perspective view of the thin-film magnetic head assembly.

Figure 2 is a graph showing the relationship between the yttrium oxide content in zirconium oxide and the content of monoclinic crystals, the deformation of the substrate and the CSS life.

## DESCRIPTION OF THE PREFERRED EMBODIMENTS

This invention will now be illustrated in more detail by the following.

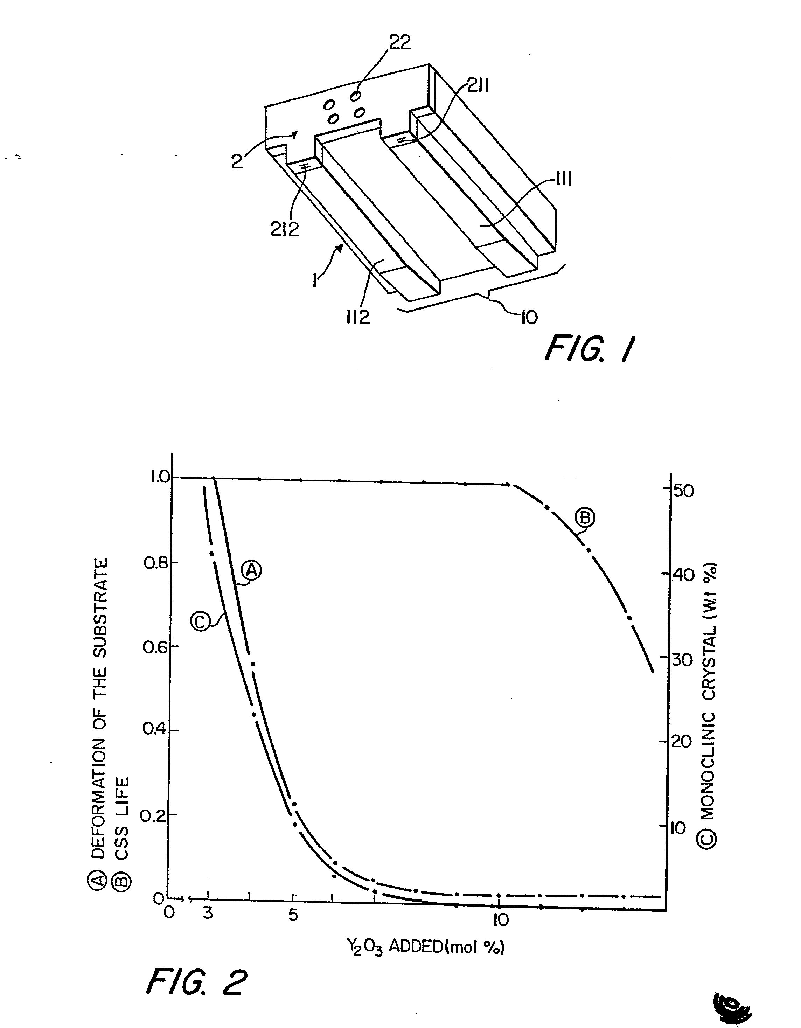

Figure 1 shows a magnetic head slider assembly having a thin-film magnetic head element. A slider 1 is formed by machining a substrate. It has an air bearing surface 10 which includes spaced rails 111 and 112 which contribute to the float relative to the surface of a rotating magnetic disk. A thin-film magnetic head element 2 is mounted on the end of slider 1. The thin-film magnetic head element 2 has at least one magnetic transducer 211 to record data on the magnetic disk. Another magnetic transducer 212 is provided for compensation. The thin-film magnetic head element 2 also has terminals 22 to lead electric lines thereto.

The above substrate is prepared as the following.

Powdery zirconium oxide ($ZrO_2$) having a purity of 99.5% was mixed with powdery yttrium oxide ($Y_2O_3$) having a purity of 99.5% in amounts of 3, 4, 6 and 10 mol %, respectively, in a ball mill, and each mixture was then sintered by means of a hot press in vacuo to give a zirconium oxide composition. A thin-film magnetic head assembly was prepared using the resulting zirconium oxide as the substrate.

Table 1 shows their crystal forms determined by X-ray diffractometry, contact start stop (CSS) lie and cut resistance for each respective mol %.

## Table 1

| Yttrium oxide added (mol %) | X-ray diffractometry results | | CSS life | Cut resistance |
|---|---|---|---|---|
| | Substrate | Slider | | |
| 3 | Monoclinic Tetragonal | Monoclinic Tetragonal | 98 | 8 |
| 4 | Monoclinic Tetragonal | Monoclinic Tetragonal | 103 | 7 |
| 6 | Cubic | Cubic | 103 | 1.2 |
| 10 | Cubic | Cubic | 110 | 1.1 |
| $A\ell_2O_3$ .TiC | - | - | 1 | 1 |

The X-ray diffraction pattern was observed using Cu as target under an accelerating voltage of 40 kV and a current of 30 mA. The CSS life was represented by the number of revolutions observed at a peripheral speed of 50 m/s until reaching a head crush by comparing with that of the $A\ell_2O_3$ .TiC material. The cut resistance was represented by the electric power required for cutting off a 4-mm thick substrate with a grinder consisting of metal-bonded #400 diamond grains by comparing with that of the $A\ell_2O_3$ .TiC.

According to the result of the above experiment, the X-ray diffraction patterns have revealed that the substrate made of zirconium oxide and 3 or 4 mol % of yttrium oxide is composed of two crystal phases, i.e. monoclinic and tetragonal, and that the substrate made of zirconium oxide incorporated with 6 or 10 mol % of yttrium oxide is composed of a single cubic phase, which never transforms to the tetragonal or monoclinic phase even with machining. The above results indicate that the partially stabilized zirconia incorporated with 3 or 4 mol % of yttrium oxide is hard to machine, which is also evident from the comparison of the cut resistance as shown in the table.

All the zirconium oxide samples are superior to $Al_2O_3$.TiC in CSS life as shown. Taking into consideration the machining property, the zirconium oxide consisting of cubic crystals which are stable at room temperature, is evidently advantageous in use as a substrate for a thin-film magnetic head slider assembly.

In another experiment, powdery zirconium oxide having a purity of 99.5% was mixed in a ball mill with powdery yttrium oxide having a purity of 99.5% in amounts ranging from 3 to 13 mol %, at intervals of 1 mol %, and each mixture was then sintered by means of a hot press in vacuo to give a zirconium oxide composition. A thin-film magnetic head was prepared using the resulting zirconium oxide as the substrate.

Figure 2 is a graph showing the content of monoclinic crystals (C) in the sintered zirconium oxide being ground in the ball mill, the deformation of the substrate being processed into a thin-film magnetic head element (A), and the CSS life (B), which are plotted against the quantity of yttrium oxide incorporated in zirconium oxide. The content of monoclinic crystals was observed by X-ray diffractometry with an accelerating voltage of 40 kV and a current of 30 mA, using Cu as

0142781

target. The deformation of the substrate was observed by sputtering the substrate, 3 inch square and 4 mm thick, with an alumina protective coat, $30\mu$m, by means of a high-frequency bias device. The CSS life was represented by the number of revolutions observed at a peripheral speed of 50 m/s until reaching a head crush. The values shown herein are compared by setting the value obtained on adding 3 mol % of yttrium oxide as 1.

With the increase in the yttrium oxide content in the zirconium oxide, the deformation of the substrate being processed into the thin-film magnetic head element was decreased and finally reduced to nearly zero when its content was 8 to 9 mol %, as shown in Fig. 2. The CSS life showed no change when the yttrium oxide content was 3 to 10 mol % but decreased when its content was 11 mol % or greater. These results can be explained as follows. Sintered zirconium oxide contains no monoclinic crystals. When it is processed by machining or grinding, tetragonal crystals remaining therein will undergo a stress-induced transformation into monoclinic crystals, followed by a volume expansion. Therefore, if the yttrium oxide content in the sintered zirconium oxide composition is increased, tetragonal crystals remaining therein will decrease and cubic crystals will increase, so that the volume expansion due to the stress-induced transformation as well as the deformation of the substrate will decrease as the substrate is being processed into the thin-film magnetic head element.

From the above findings, it is concluded that the yttrium oxide content in the zirconium oxide should be in a range of 6 to 11 mol %, preferably 8 to 10 mol %, in order to minimize the deformation of the substrate due to the phase transformation of zirconium oxide and moreover to provide the substrate with sufficient CSS life and excellent machining properties.

## CLAIMS

1. A magnetic head slider assembly, comprising:

a) a slider (1); and

b) at least one magnetic transducer (211) mounted on said slider (1), wherein said slider (1) is formed of a composition comprising zirconium oxide.

2. The assembly according to claim 1, wherein said composition further comprises one of yttrium oxide and calcium oxide.

3. The assembly according to claim 1, wherein said zirconium oxide composition is essentially in the form of cubic crystals.

4. The assembly according to claim 1, wherein said composition comprises zirconium oxide and yttrium oxide.

5. The assembly according to claim 4, wherein an amount of yttrium oxide in said composition is substantially in a range of 6 to 11 mol %.

6. The assembly according to claim 4, wherein an amount of yttrium oxide in said composition is substantially in a range of 8 to 10 mol %.

7.    The assembly according to claim 1,  wherein said slider(1/ has an air bearing surface (10).

8.    The assembly according to claim 5, wherein said zirconium oxide in said composition is essentially in the form of cubic crystals.

9.    A composition for a magnetic head slider, comprising zirconium oxide.

10.    The composition according to claim 9, wherein said zirconium oxide is essentially in the form of cubic crystals.

11.    The composition according to claim 9,  further comprising one of yttrium oxide and calcium oxide.

12.    The composition according to claim 9,  further comprising yttrium oxide.

13.    The composition according to claim 12, wherein an amount of yttrium oxide is substantially in a range of 6 to 11 mol %.

14.    The composition according to claim 12, wherein an amount of yttrium oxide is substantially in a range of 8 to 10 mol %.

15.    The composition according to claim 12,   wherien   said zirconium oxide is essentially in the form of cubic crystals.

16.    The composition according to claim 13,   wherein   said zirconium oxide is essentially in the form of cubic crystals.

17.    A  process for the preparation of a composition for  a magnetic head slider, comprising:

     providing zirconium oxide;

     providing yttrium oxide;

     mixing said zirconium oxide and yttrium oxide; and sintering the mixture produced by mixing.

18.    The process according to claim 17, wherein said yttrium oxide is povided in an amount substantially in a range of 6 to 11 mol % of the composition.

19.    The process according to claim 18, wherein said yttrium oxide  is provided in an amount substantially in a range of 8  to 10 mol % of the composition.

0142781

20.    A    process for the preparation of a composition for  a magnetic head slider, comprising:

          providing 99.5% pure zirconium oxide;

          providing 99.5% pure yttrium oxide;

          adding the yttrium oxide to the zirconium oxide  in an amount in the range of 6 to 11 mol % of the composition;

          mixing in a ball  mill; and

          sintering  in a hot press in vacuo to produce  the

composition.

FIG. 1

FIG. 2

0142781